# EUROPEAN PATENT SPECIFICATION

(11) **EP 3 792 467 B1**
(45) Date of publication and mention of the grant of the patent: **08.03.2023**
(21) Application number: 20000302.8
(22) Date of filing: 21.08.2020
(51) Int. Cl.: F02C 6/16, B65D 88/76, E04H 7/02, F17C 1/00

(54) **UNDERGROUND COMPRESSED AIR STORAGE INSTALLATION**
ANORDNUNG ZUR SPEICHERUNG VON DRUCKGAS
INSTALLATION POUR LE STOCKAGE DE GAZ COMPRIMÉ

(30) Priority: 16.09.2019 PL 43115619
(43) Date of publication of application: 17.03.2021
(73) Proprietor: Politechnika Slaska, 44-100 Gliwice (PL)
(72) Inventor: BARTELA, Lukasz, 44-145 Pilchowice (PL); LUTYNSKI, Marcin, 44-105 Gliwice (PL); SMOLNIK, Grzegorz, 44-186 Gieraltowice (PL); WANICZEK, Sebastian, 44-145 Pilchowice (PL)

(56) References cited:
- EP-A1- 2 832 666
- EP-A1- 3 091 148
- WO-A1-2018/092122
- US-A- 4 147 204

## Description

The subject of the invention is an underground compressed air storage, built-in particularly in the post-mining mine shaft, intended particularly for air and thermal energy storage from compressed air cooling as part of adiabatic energy storage systems in compressed air (ACAES, Adiabatic Compressed Air Energy Storage).

Compressed air storage is an indispensable element of the compressed air storage systems (CAES) structure. Except for the air storage itself in CAES systems it is necessary to use an air compressor unit (compressor and electric motor), where the process of compressing atmospheric air is carried out by using electricity directed to the storage system. Another indispensable element is the air expander unit (expander and electricity generator), which enables the conversion of potential energy of previously stored air into electricity. The work of the compressor unit is carried out at the stage of charging the CAES system, where this process takes place during periods of overproduction of energy in generating systems, while the expander works at the stage of CAES system discharging, i.e. in a situation where there is an increased demand for energy in the power system.

Compressed air energy storage is a concept proposed for system applications and as such is a competition for the most commonly used pumped storage power plants. The large scale of projects implemented in the world requires, in general, planning of compressed air reservoirs as underground structures. Most commonly, for this purpose salt caverns are used - natural or resulting from the leaching of the salt deposit. However, the use of salt caverns as potential storage of compressed air in many countries, including Poland, is currently practically impossible due to the strategic need to increase the storage capacity of hydrocarbons: crude oil and natural gas. The need to increase the volume of stored fuels, in view of the insufficient capacity of existing storage volumes, means that virtually all salt caverns meeting the conditions will be used as a storage for key imported raw materials, whose availability is of fundamental importance for the economy and security of the state.

In CAES systems at the compression stage, due to the accompanying process of compressed air temperature increase, it is necessary to use intersection air cooling and to use air cooling leaving the compressor. Intersection cooling is implemented to reduce the unit work of the compression process and to ensure a safe compressed air temperature from the point of view of safe operation of the compressor. The cooling of the air leaving the compressor, i.e. before it enters the storage tank (above ground or underground), is determined by the thermal resistance of the materials used in the construction of the tanks and reduction of heat loss to the environment. The purpose of air cooling processes is its storage at generally low temperature. Due to the low potential of such air to perform work in the expander, at the stage of CAES system discharge, air-heating is conducted. In the classic CAES system, the so-called diabatic system, the temperature increase of the medium reaching the expander is obtained by burning gaseous fuel in the atmosphere of compressed air. An alternative option is to use the heat of air cooling that was carried out at the stage of the compression process. System organized in such a way falls under the definition of the so-called adiabatic CAES system (ACAES).

The thermal energy storage system in the ACAES system is designed to store the heat captured from the compressed air, until the beginning of the discharge stage, in which the compressed air leaving the air storage is directed to the expander driving the electricity generator. To increase the unit work, the air is subjected to a heating process prior to entering the expander by using the heat stored during the charging phase of the electricity storage system. Several solutions for storing high-temperature heat from the cooling of compressed air are known. The temperature of the air leaving a given section of the compressor can reach as high as over 600 °C. The heat collection and storage system should allow the compressed air to be cooled to a level that guarantees the operational safety of the compressed air storage but at the same time it should allow heat storage at a high level of storage temperature, which will allow for a high degree of heating of the air directed to the expander at the stage of ACAES system discharge. Thus, ensuring high efficiency of the expansion process. For this reason, it is often proposed to use solid storage materials in thermal energy storage system, these can be ceramic elements, concrete or natural rocks. An example of the use of ceramic materials is the heat accumulator used as part of the world's most advanced adiabatic ADELE demonstration system, to be located in Germany. Planed thermal energy storage system is a ground structure, where a cylindrical concrete tank is filled with ceramic bricks, enabling thermal energy storage at a temperature of 600 °C. The disadvantage of this solution is the need to use a concrete tank with very thick, reinforced walls in the storage tank construction, which is a consequence of a high stresses exerted on the walls due to the differences between the atmospheric air pressure and the stored compressed air pressure giving away or receiving heat from the ceramic material.

The use of rocks as heat accumulating material was tested as part of a demonstration installation of a thermal energy storage system built inside a compressed air tank. This arrangement of the thermal energy storage system reduces the stress in the outer shell of the accumulator due to the even pressure profiles on both sides of the insulating shell, which allows the use of a thin-walled tank with accumulative filling. The installation located in Swiss Lugano is built above ground, but the simulated conditions correspond to the conditions that are similar as in underground excavations. The disadvantage of the concept developed by ALACAES if coal mine gate roads are used is related to the difficulties in the construction of pipelines for hot air transport between the above-ground engine room (compressor set and expander set) and an underground storage with thermal energy storage, or possible difficulties in constructing the engine room as an underground installation in close proximity to the air storage integrated with the thermal energy storage system. With regard to the use of solid materials for thermal energy storage, another possible solution is to use liquid thermal oil for this purpose. At the stage of charging the ACAES system, the air is diaphragm cooled by oil directed to the exchangers from the cold oil tank. After receiving the heat, the heated oil is directed to a thermally insulated hot oil tank and stored there until the ACAES system discharge stage begins. The hot oil is then directed to the diaphragm heat exchanger, where it gives off heat to the air directed from the compressed air storage to the expander. The disadvantages of using the thermal oil system is the need for diaphragm heat exchangers and safety considerations related to the use of high temperature oil. In addition, thermal oils generally do not allow heating to temperatures above 400 °C. The disadvantage of using thermal oils is their relatively low heat capacity, which in terms of weight, is about twice lower than that of water. Document US4147204A discloses a compressed air energy storage system according to the state of the art.

The purpose of the invention is to store high-pressure, high temperature air entering the tank as part of adiabatic energy storage systems in compressed air while maintaining safety considerations for the materials used and minimizing heat losses to the storage environment.

The goal was achieved through the use of cylindrical, airtight underground tank with a vertical axis, which may, in particular be an abandoned mine shaft, in which a thermal energy storage systemwas built, constituting a structure made of cylindrical elements with thermal insulation, built in series, in the axis of the underground tank and filled with heat accumulating bed .

The invention as defined in claim 1 consists of an underground compressed air storage system, built-up especially in an abandoned mine shaft, constituting a vertical, cylindrical underground tank, preferably a mine shaft, characterized by the fact that the system contains a pressure tank with a lining and a bottom, tightly closed from above with a lid with a built-in supply port with a shut-off valve through which high temperature air is supplied and shut-off valve through which a high temperature air is discharged and where cylindrical elements are suspended coaxially in vertical position on the upright supports, closed from the top with a lid, from the bottom with endplate with pressure flaps and externally covered with thermal insulation made of glass or ceramic fibers and filled inside with a heat accumulative insert

The preferred storage solution according to the invention is characterized in that it has a revision hatch in the lid.

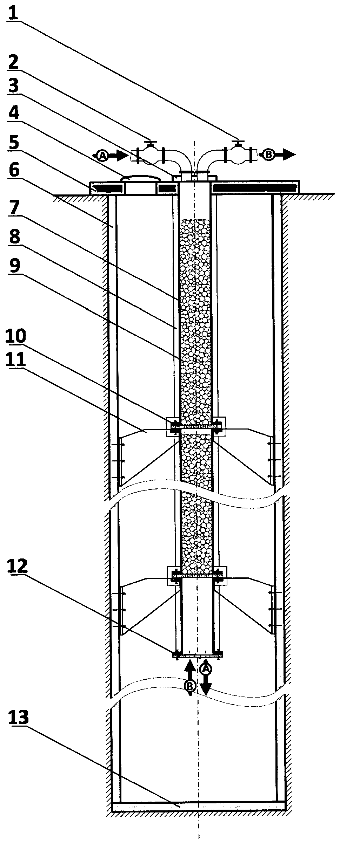

An advantageous storage solution according to the invention is characterized in that rock or ceramic elements supported on the perforated supporting plates are used as the accumulation bed, enabling heating to high temperatures. The subject of the invention in the example implementation is explained in more detail on the drawing, showing a cross-section through an adapted cylindrical mine shaft in the plane defined by its axis. The drawing shows the compressed air storage, where a vertical, cylindrical underground tank is used, whose lining 6, bottom 13 and lid 5 form a sealed pressure tank. The tank lid is sealed with a thermal energy storage system lid 3, which is an integral element of the compressed air tank. The thermal energy storage system consists of cylindrical elements 7, externally covered with thermal insulation of glass or ceramic fibers 8 and inside filled with a heat accumulating insert 9, constituting rock elements, mounted on perforated supporting plates 10. Cylindrical elements 7 of the reservoir and perforated supporting plates 10 are built in the axis of the tank underground. The perforated supporting plates 10 are located between the flanges of individual cylindrical elements of the thermal energy storage system. The thermal energy storage system is suspended in the space of the underground tank on the upright supports 11.

Hot, compressed air is introduced into the tank through an inlet pipeline with a built-in shut-off valve 2 and flows axially through the thermal energy storage system, giving heat to the rock accumulating material. The last element of the thermal energy storage system through which air flows at the tank charging stage is the endplate with pressure flaps 12. The geometry of the cylindrical elements 7 and the amount of heat accumulating insert 9 are selected to ensure an adequate degree of cooling of the air introduced into the storage volume, which is not the volume of the thermal energy storage system. Considering that the air accumulated in the tank will take over heat from the accumulation bed 9 by way of unwanted penetration, it is important that the limit air temperature at the discharge stage is not higher than the critical temperature from the point of view of safe operation of the underground tank, which is dictated by the thermal resistance of the construction materials. The air at the stage of tank discharge flows through the thermal energy storage system, taking heat from the accumulation bed and as hot is discharged to the CAES system expander unit by a pipeline with a built-in shut-off valve 1. The top lid of the tank 5 is additionally equipped with an inspection hatch 4, enabling tank inspection and maintenance. It is beneficial to use an appropriate accumulating material with and appropriate volume for the filling of the thermal energy storage system, enabling sufficient transfer of the heat amount that would allow high degree of air cooling leaving the thermal energy storage system. Limiting the temperature of the air in contact with the underground tank housing will result in limiting heat loss to the compressed air storage environment and as a result, increased energy storage efficiency of the CAES system. It is beneficial to use an appropriate geometry of the flow channels in the accumulation bed, guaranteeing high heat transfer efficiency with low flow resistances. It is beneficial to use thermal insulation as the lining of heat storage elements, guaranteeing minimization of heat flux transferred from the accumulation material to cooled air, stored in an underground storage, outside the volume of the thermal energy storage system. It is beneficial to shorten the storage time of compressed air, and thus also the storage of high temperature heat, which will allow the minimization of the amount of heat transferred from the storage material to the air stored in the underground storage, outside the volume of the thermal energy storage system.

The advantage of the solution according to the invention is the possibility of its adaptation to organize a highly effective pressure tank in the volume of the post-mining mine shaft. It is possible to use and adapt existing mining shafts in mines under closure as compressed air energy storage.

The decision to decommission the mine or its part is usually accompanied by the decision of the liquidation of the shafts, which is implemented by constructing barriers at the so called shaft stations which are the connection points of the shaft and the main horizontal excavations and subsequent backfilling of the interior of the shaft with different kinds of aggregate and placing a reinforced concrete cover at the land surface level.

In this way, those excavations whose drilling costs and equipment are counted in at least hundreds of millions of zlotys are irretrievably lost and any (including economic) reuse is impossible. The shaft is the most important excavation of every mine and care for its condition (housing, equipment) is a priority throughout the life of each mining plant and incomparable to any other underground excavation. As an alternative for backfilling the decision to build a clean compressed air energy store in the mine shaft, which is the subject of this notification, at the stage of the decision on the liquidation of the mine allows the use of existing infrastructure in good condition in a way that increases the security of the country's power system, and thus is a model example of post-mining revitalization.

The construction of the described energy storage in compressed air may be particularly advantageous in those locations where an industrial electricity producer (conventional power plant) is in the immediate vicinity of the decommissioned mine or part of it with the shaft/shafts. In many cases, also in Poland, such locations can be indicated.

The mining shaft is protected against destructive influence of rock mass pressure (stress in rocks) with various types of lining (usually thick-walled reinforced concrete or segmented thick-walled iron tubing), which ensures its stability. The compressed air inside it, with a range of pressures used in this type of installations, will exert pressure on the lining in the opposite direction to the action of the rock mass, so it will not add up to the impact of the rock mass, but on the contrary, will counteract its impact by inhibiting the convergence of the excavation. Due to the fact that - depending on the depth - the rock mass pressure acting on the lining assumes values similar to the pressure of the compressed air acting in the opposite direction, e.g. at a depth of 400m - about 10 MPa, it is expected that there will be no need to install an additional lining at a considerable length (depth) of the future compressed air storage but only supplementary elastic sealing layer. The shaft lining, in contrast to the lining of the vast majority of other mining excavations, is designed and constructed as relatively tight (due to water-bearing aquifers in the rock mass, often under pressure), which is another advantage of the proposed solution. In addition, the rock temperature in the rock mass increases with depth, e.g. in the conditions of most Polish mines about 3 °C for every 100 m deep, so at a depth of 1000 m it is well over 30°C and is constant, hence heat transfer from the storage will be limited.

Mining shafts on the main surface of the mine are drilled in at least in pairs, and most often as three or even four (or even more, albeit rarely) and are close to each other. These excavations, several dozen meters apart, are connected on several levels below the surface. These connections are made through openable dams or barriers or they can be easily installed. In many liquidated mines, the threat of flooding neighboring active mining plants (connected hydraulically by a jointed rock mass) has forced, enforces and will force in the future to leave at least one shaft to pump water active. The costs of pumping and maintaining shaft infrastructure in decommissioned mines are borne by the State Treasury. Liquidation of the pumping station is possible only after the last mine in the entire region of the exploited basin has been closed down. Construction of an energy storage in one of the shafts at the main surface in the presence of an adjacent shaft excavation, intended for pumping water, greatly facilitates the process of adaptation/construction of energy storage and access to renovation works or control visits.

The vast majority of mining shafts are fitted up, i.e. they have various types of equipment that can significantly facilitate construction and maintenance/repairs during their use as an underground compressed air energy storage. This equipment includes shaft towers with hoisting machines, steel guides used as guides for hoisting vessels/shaft cages, evacuation ladder compartments along the entire length of the shaft, various types of pipelines (water, methane drainage, fire protection, etc.), electric and telephone cables, often also fiber optics. The use of this infrastructure, otherwise useless, may also reduce the costs of building and using a storage facility. However, there are, although to a large minority, mining shafts not fitted up, that is, those in which no additional equipment has been installed (except for the shaft lining itself).

Shafts of this type are ventilation shafts (they are used to remove so-called used air or supply fresh air) and a significant part of them is located close to the border of the mining lease. The shaft shown in the figure below belongs to this category, because the lack of shaft equipment does not mean that it cannot be adapted for storage purposes, it only entails other types of requirements for its adaptation process and subsequent use as a compressed air energy storage facility.

The costs associated with sealing operations of the shaft lining to adapt to the storage of high-pressure air may be acceptable in relation to the costs required for the construction of e.g. salt caverns. The installation of the tank according to the invention can be carried out in locations where geological conditions does not allow for the construction of salt caverns, but post-mining facilities are located. Adaptation of such infrastructure can be an interesting option for revitalizing of the post-mining regions. The design of the tank with a high-temperature thermal energy storage system built inside will eliminate the need for installation as part of the adiabatic CAES system of membrane heat exchangers necessary for cooling air entering the pressure vessel. The invention is an interesting alternative to the use of above-ground thermal energy storage systems, where the use of thick-walled reservoir casings is required. The location of the tank in the tank space allows to compensate for the losses of heat dissipated to the storage unit environment - the heat conducted through the tank's thermal insulation will be first taken over by the air accumulated in the underground tank and in a significant part will be effectively used in the air expander unit.

### List of markings

1. Shut-off valve in the outlet pipeline
2. Shut-off valve in the inlet pipe
3. Thermal energy storage system lid
4. Revision hatch
5. Compressed air storage lid
6. Lining of the cylindrical underground tank (e.g. mine shaft)
7. Cylindrical element of the thermal energy storage system
8. Thermal insulation of the thermal energy storage system
9. Heat accumulating insert
10. Perforated supporting plate
11. Thermal energy storage system upright supports
12. Endplate with pressure flaps
13. Bottom of the cylindrical underground tank
The red arrows indicate the direction of the compressed air flow for the charging (A) and discharging (B) stages of the storage.

## Claims

1. Underground compressed air storage system, built-up especially in an abandoned mine shaft, constituting a vertical, cylindrical underground tank, preferably a mine shaft, **characterized by** the fact that the system contains a pressure tank with a lining (6) and a bottom (13), tightly closed from above with a lid (5) with a built-in supply port with a shut-off valve (2) through which high temperature air is supplied and shut-off valve (1) through which a high temperature air is discharged and where cylindrical elements (7) are suspended coaxially in vertical position on upright supports (11), the cylindrical elements being closed from the top with a lid (3), from the bottom with an endplate with pressure flaps (12) and externally covered with thermal insulation made of glass or ceramic fibers (8) and filled inside with a heat accumulative insert (9).

2. Underground compressed air storage system according to claim 1 **characterized in that** it has a revision hatch (4) in the lid (5).

3. Underground compressed air storage ; system according to claim 1 **characterized in that** the system further comprises rock or ceramic elements supported on perforated supporting plates (10) which are used as the accumulation bed, enabling heating to high temperatures.

## Patentansprüche

1. Ein unterirdisches System zur Aufbewahrung von Druckluft, eingebaut besonders in einen nicht betriebenen Bergwerkschacht, welcher ein senkrechter zylindrischer Behälter, besonders ein Schacht ist, **dadurch gekennzeichnet, dass** er einen Druckbehälter mit Belag (6) und Boden (13) enthält sowie oben mit einem Deckel (5) mit einem eingebauten Anschluss mit Sperrventil (2) dicht verschlossen ist, durch welche die Luft mit hoher Temperatur geliefert wird und mit einem Sperrventil (1), durch welches die Luft mit hoher Temperatur abgeleitet wird und wo zylindrische Bestandteile (7) koaxial in senkrechter Lage an senkrechten Stützen (11) abgehängt und die zylindrischen Bestandteile von oben mit einem Deckel (3) und von unten mit einer Endplatte mit Druckklappen (12) verschlossen sind und von außen mit Wärmedämmung, ausgeführt aus Glas- bzw. Keramikfasern (8) bedeckt und in der Mitte mit einer Einlage zur Wärmeaufnahme (9) gefüllt sind.

2. Ein unterirdisches System zur Aufbewahrung von Druckluft gemäß Anspruch 1 **dadurch gekennzeichnet, dass** der Deckel (5) einen Revisionseinstieg (4) hat.

3. Ein unterirdisches System zur Aufbewahrung von Druckluft gemäß Anspruch 1 **dadurch gekennzeichnet, dass** das System auch die auf gelochten Stützblechen liegenden (10) Stein- bzw. Keramikbestandteile hat, die als Akkumulationsschicht dienen, indem sie das Aufwärmen zu hohen Temperaturen ermöglichen.

## Revendications

1. Système de stockage souterrain d'air comprimé, construit notamment dans un puits de mine désaffecté et constituant un réservoir cylindrique vertical, notamment un puits de mine, **caractérisé en ce qu'il** se compose d'un récipient sous pression avec un revêtement (6) et un fond (13) et est fermé en haut par un couvercle (5) avec un raccordement intégré avec une vanne d'arrêt (2) par laquelle l'air à haute température est amené et avec une vanne d'arrêt (1) par laquelle l'air à haute température est évacué et où les éléments cylindriques (7) sont suspendus coaxialement en position verticale sur des supports verticaux (11), et les éléments cylindriques sont fermés en haut par un couvercle (3), en bas par une plaque d'extrémité avec des volets de pression (12), et recouverts à l'extérieur d'une isolation thermique en fibres de verre ou de céramique (8) et remplis à l'intérieur d'un insert absorbant la chaleur (9).

2. Système de stockage souterrain d'air comprimé selon la revendication 1, **caractérisé en ce que** le couvercle (5) comporte une trappe d'inspection (4).

3. Système de stockage souterrain d'air comprimé selon la revendication 1, **caractérisé en ce que** le système comprend également des éléments en roche ou en céramique reposant sur des plaques de support perforées (10), qui servent de lit d'accumulation, permettant le chauffage à des températures élevées.
